# EUROPEAN PATENT SPECIFICATION

(11) **EP 4 468 451 B1**
(45) Date of publication and mention of the grant of the patent: **23.07.2025**
(21) Application number: 23174879.9
(22) Date of filing: 23.05.2023
(51) Int. Cl.: H01M 10/60, H01M 50/30, H01M 50/289, H01M 50/242, H01M 50/204, H01M 50/249, H01M 50/35

(54) **BATTERY PACK**
BATTERIEPACK
BLOC-BATTERIE

(43) Date of publication of application: 27.11.2024
(73) Proprietor: Röchling Automotive SE, 68165 Mannheim (DE)
(72) Inventor: Montaruli, Mariagrazia, 70037 Ruvo di Puglia (IT); Pichler, Elmar, 39054 Renon (IT); Behnisch, Felix, 69115 Heidelberg (DE); Ganthaler, Christoph, 39025 Naturno (IT); Traina, Matteo, 39055 Laives (IT)
(74) Representative: Ullrich & Naumann PartG mbB

(56) References cited:
- WO-A1-2021/105328
- CN-A- 115 621 603
- US-A1- 2015 135 939
- US-B2- 10 680 296
- US-B2- 11 024 901

## Description

The present invention relates to a battery pack comprising a plurality of battery cells and an enclosure.

The present invention further relates to a method for providing a battery pack, comprising the steps of
- Providing a plurality of battery cells, and
- Providing an enclosure.

Although applicable to any kind of battery pack, the present invention will be described with regard to battery packs for vehicles in form of cars.

Battery packs or batteries for automotive applications, are for instance disclosed in US 9,698,394 B2 showing a battery with a plurality of battery cells and a cover, covering at least a part of the surfaces of the battery cells. Each cell comprises a degasification element, configured to discharge gases generated within the respective battery cell from the respective battery cell in the presence of an internal overpressure due to gas generation. The cover has, in each case in the region of the degasification elements, predetermined breaking points, that can be assigned to the degasification elements.

WO 2021/105328 A1 relates to a battery housing for a vehicle driven by an electric motor. The floor of the battery housing has a sandwich construction with temperature-control channels for guiding a fluid.

US 11,024,901 B2 shows a cooling system for cooling battery cells. The cooling system comprises a chamber configured to receive a cooling fluid. The cooling system further comprises a plate assembly with a first cooling plate and a second cooling plate, which are connected by protuberances and which are cooled by the cooling fluid.

CN 115 621 603 A shows a structural battery frame with a plurality of apertures configured for holding battery cells. The battery cells are held in place within the apertures by a flowable adhesive, which after curing bonds the cells to the battery frame.

US 10,680,296 B2 discloses a battery cell and a fluid channel for cooling the battery cell. The fluid channel comprises two walls, which are spaced apart by a plurality of spacers, whereby the spacers are positioned such that the cooling fluid flows to hot spots of the battery cell.

US 2015/135939 A1 relates to a battery pack protection system with a plurality of cooling conduits, which are deformable. Upon impact, the cooling conduits deform and absorb the kinetic energy in order to protect the battery cells within the battery pack. The battery pack comprises further a ballistic shield made from a compressible material.

One of the disadvantages is however, that a in case of a degasification event one or more of the predetermined breaking points break and cause an uncontrollable flow of the gas through said one or more breaking points into the surroundings of the battery, heating and damaging the neighboring cells. A further disadvantage is that in case of impact event, e.g. crush with an impactor at the bottom of the battery pack, the impact energy will be provided to the adjacent cells causing potential damage to them.

An objective of the present invention is therefore to provide a battery pack and a method for providing a battery pack enabling a battery pack providing enhanced shock or impact absorption at least in part as well as a guiding of the gas of degasification events of one or more of the battery cells of the battery pack.

In an embodiment, the present invention solves the above-mentioned objectives with a battery pack comprising
a plurality of battery cells, and
an enclosure, wherein
the plurality of battery cells are arranged on top of a horizontal component, preferably in form of a plate, and that
the horizontal component is spaced apart from the enclosure by at least one spacer element, said at least one spacer element providing at least one hot stream channel,
wherein
the horizontal component comprises at least one predetermined breaking point formed such to provide a hot stream flow to enter said at least one hot stream channel upon breaking said at least one breaking point, wherein
each predetermined breaking point is provided such that upon breaking of an emergency opening of a battery cell, hot stream flows to said breaking point, wherein said at least one breaking point is provided in form of a local thickness and/or density reduction and/or a fragile element, preferably a membrane, within the horizontal component.

**In** an embodiment, the present invention solves the above-mentioned objectives by a method for providing a battery pack, comprising the steps of
- Providing a plurality of battery cells,
- Providing an enclosure,
- Arranging the plurality of battery cells on top of a horizontal component,
- Spacing apart the horizontal component from the enclosure by at least one spacer element, wherein said at least one spacer element provides at least one hot stream channel,

preferably wherein said horizontal component is manufactured using injection moulding, wherein
the horizontal component is provided with at least one predetermined breaking point formed such to provide a hot stream flow to enter said at least one hot stream channel upon breaking said at least one breaking point, wherein
each predetermined breaking point is provided such that upon breaking of an emergency opening of a battery cell, hot stream flows to said breaking point, wherein said at least one breaking point is provided in form of a local thickness and/or density reduction and/or a fragile element, preferably a membrane, within the horizontal component.

One of the advantages that may be achieved is that the shock and impact absorption is enhanced, in particular due to the spacer elements acting as a mechanical and/or impact energy dissipator in case of impact/crush with an impactor. A further advantage may be that a guided venting of degasification events is provided, e.g. released during thermal runaway events. A further advantage may be that the overall stiffness of the battery pack is enhanced, in particular due to the spacer elements acting as a mechanical reinforcement elements.

The term "hot stream channel" is to be understood in its broadest sense and applies to any kind of channel, guiding, duct, pipe or the like for guiding, directing or the like of fluid streams of any kind of temperature between 0 °C and 1.500 °C for instance, wherein a fluid comprising one or more liquids and/or one or more gases.

Further features, advantages and preferred embodiments are disclosed or may become apparent in the following.

According to claim 1, the horizontal component comprises at least one predetermined breaking point formed such to provide a hot stream flow to enter said at least one hot stream channel upon breaking said at least one breaking point, preferably each with one hot stream channel. This may provide a reliable way to allow a hot stream to enter the hot stream channel in case of a venting event of the battery pack.

According to claim 1, each predetermined breaking point is provided such that upon breaking of an emergency opening of a battery cell, hot stream flows to said breaking point. This may further enhance the reliability of the guiding providing a short distance to the hot stream channel and avoiding potential damage to surrounding battery cells. The term "emergency opening" is to be understood in its broadest sense and means in particular in the claims, preferably in the description any dedicated opening, which is closed during normal operation and/or which can be opened, from the cell side to the enclosure side but not vice versa and is opened in case of an internal or external event causing an abnormal operation.

According to claim 1, said at least one breaking point is provided in form of a local thickness and/or density reduction and/or a fragile element, preferably a membrane, within the horizontal component. This may enable an easy and cost-effective while reliable way to provide a breaking point.

According to a preferred embodiment, the horizontal component comprises at least two parts detachably joined together, preferably via one or more screw connections and/or one or more clip connections. This may enable an easy manufacturing as well as an easier handling after lifetime of the battery pack for recycling purposes of the horizontal component.

According to a further preferred embodiment, between the horizontal component and at least one of the battery cells a layer component is arranged comprising heat resistant material, preferably fragile heat resistant material. The layer component may be provided by overmoulding or clipping. An advantage may be that hot stream from a battery cell breaks the fragile material only locally, in correspondence to location of the predetermined breaking point. In this way the probability of damaging the battery cells and the horizontal component away from the breaking point is reduced or even damage can be avoided. Of course, there may be a plurality of layer components arranged.

According to a further preferred embodiment, at least two spacer elements are provided, wherein the spacer elements are spaced apart from each other providing a hot stream channel between said two spacer elements. This may even further enhance the stiffness of the battery pack as well as provides an easy way for guiding a hot stream. A complicated single spacer element providing a hot stream channel as a via or channel within said spacer element can be avoided.

According to a further preferred embodiment, the spacer elements are arranged essentially perpendicular to the horizontal component. This may allow an easy installation, an increased stiffness as well as a good protection of the battery cells on top of the horizontal component against impacts.

According to a further preferred embodiment, the enclosure comprises at least in part a metal and/or plastic, preferably a thermoplastic. This may allow an easy, cost-effective and flexible manufacture of the enclosure. For instance, part of the enclosure comprising metal allow a cooling down of the hot stream before reaching a battery pack outlet.

According to a further preferred embodiment, a bottom of the enclosure is connected to the horizontal component via said at least one spacer element. This may allow an easy way to provide one or more hot stream channels. Further, the probability of the hot stream to damage other battery cells is reduced.

According to a further preferred embodiment, said at least one hot stream channel comprises one or more sections having at least in part a spiral, serpentine, or labyrinth form, preferably wherein said at least one hot stream channel is provided in form of a spiral, serpentine, or labyrinth. This may further enable a further cooling down of a hot stream before reaching an outlet of the battery pack and trap as well released hot particles.

According to a further preferred embodiment, a bottom of the enclosure is trough-shaped providing a receptacle for hot stream. This may enable a cooling down of the hot stream without affecting or damaging other battery cells while providing in an easy way a receptacle for hot streams.

According to a further preferred embodiment, a plurality of spacer elements is formed such to provide a grid structure, preferably forming a plurality of separate compartments. This may enhance the stiffness of the battery pack as well as the energy absorption when an impact intrusion occurs. If separate compartments are provided, flexibility is enhanced allowing separating the hot stream of a damaged battery cell from hot streams of other damaged battery cells.

According to a further preferred embodiment, at least two of said plurality of compartments are connected via a inter compartment channel, preferably wherein two adjacent compartments are connected via an opening in the common wall of said two compartments. This may enable a guiding of one or more hot streams in an easy while reliable way to an outlet of the battery pack.

According to a further preferred embodiment, a shock absorbing element, preferably foam, preferably PUR foam, is provided in at least one of the compartments, preferably in each compartment. This may enable a further enhancement in the shock absorbing properties of the battery pack. "PUR" means here polyurethane.

According to a further preferred embodiment, the shock absorbing element is covered with a membrane element, preferably wherein the shock absorbing element is located below an inter compartment channel. This may allow a further enhancement of the reliability of the operation of the battery pack. The additional membrane inside a compartment and below the inter compartment channel, e.g. an opening in a wall between two compartments, to avoid a blocking of the opening by the shock absorbing element and/or the membrane allows for a further damping of the shock absorbing element upon impact.

According to a further preferred embodiment, the horizontal component is made of plastic, preferably reinforced plastic. This provides an easy to produce and cost-effective, light-weight horizontal component.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows a cross section of part of a battery pack according to an embodiment of the present invention;
- Fig. 2: shows a three-dimensional view of a grid structure of a battery pack according to an embodiment of the present invention;
- Fig. 3: shows a three-dimensional view of a compartment of a grid structure of a battery pack according to an embodiment of the present invention;
- Fig. 4: shows a schematically view of output channels, preferably hot stream channels, of a battery pack according to an embodiment of the present invention; and
- Fig. 5: shows steps of a method according to an embodiment of the present invention.

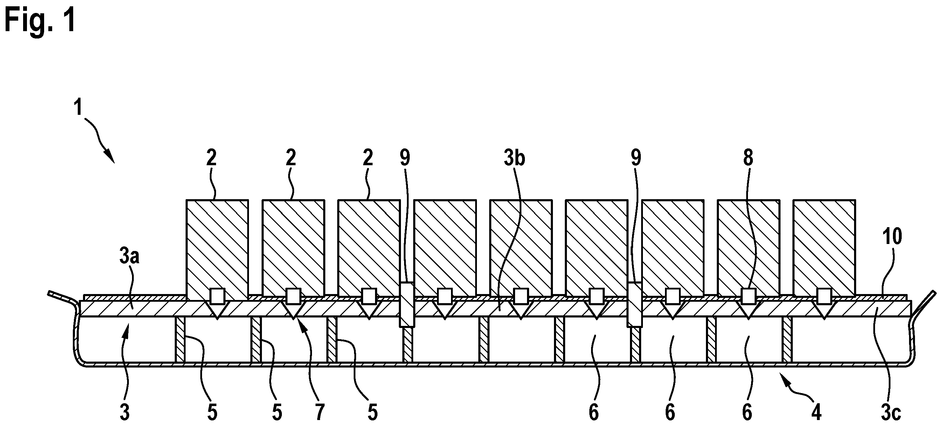

Figure 1 shows a cross section of part of a battery pack according to an embodiment of the present invention.

In Figure 1, a lower part of a battery pack 1 is shown. The battery pack 1 comprises a plurality of battery cells 2 located on a thin layer of fragile, heat resistant material 10. The layer 10 is provided on top of a horizontal component in form of a horizontal plate 3. The horizontal plate 3 comprises a plurality of predetermined breaking points 7 each being associated with an emergency or venting opening 8 of a battery cell.

Beneath the horizontal plate 3 a plurality of spacer elements 5 is provided, wherein the spacer elements 5 are arranged perpendicular to the plane of the horizontal plate 3 and are extending to a through-shaped bottom of an enclosure 4, such that also the spacer elements 5 are arranged perpendicular to a surface of the bottom of the enclosure 4. In other words, the spacer elements 5 are arranged on the through-shaped bottom of the enclosure 4 spacing apart said bottom from said horizontal plate 3. The horizontal plate 3 may act as closure for the space between the horizontal plate 3 and the through-shaped bottom. The spacer elements 5 provide one or more hot stream channels 6 for guiding hot stream upon entering the respective channel to an outlet.

The horizontal plate 3 comprises a plurality of parts 3a, 3b, 3c, which are detachably connectable with each other via connections 9. These connections 9 may be screw connections or clip connections. Of course, other types of connections are possible.

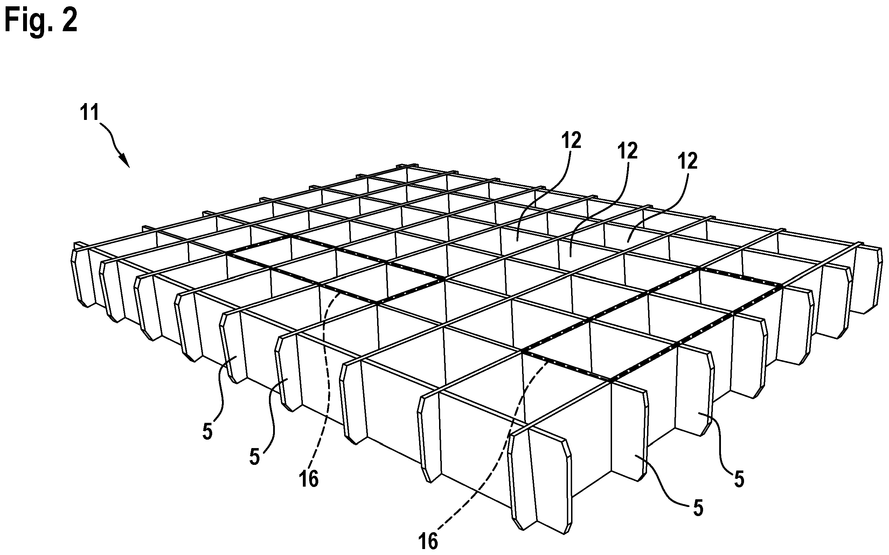

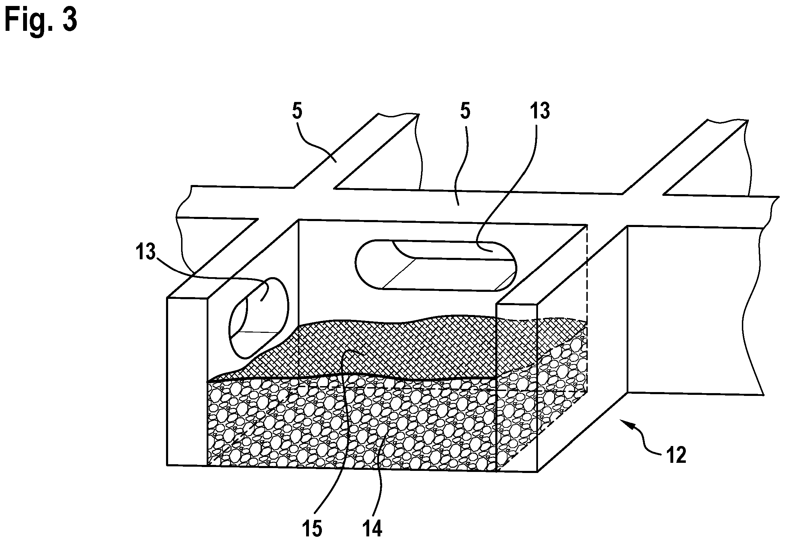

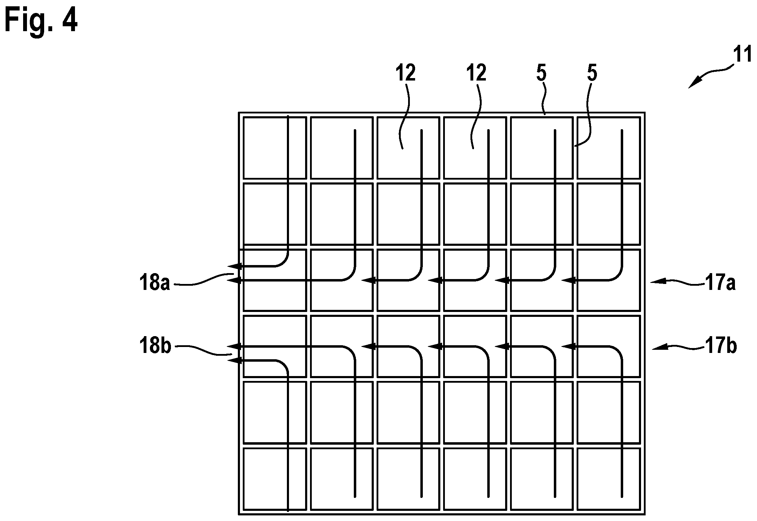

Figure 2 shows a three-dimensional view of a grid structure of a battery pack according to an embodiment of the present invention, Figure 3 shows a three-dimensional view of a compartment of a grid structure of a battery pack according to an embodiment of the present invention and Figure 4 shows a schematically view of output channels, preferably hot stream channels, of a battery pack according to an embodiment of the present invention.

In Detail, Figure 2 shows a plurality of spacer elements 5 arranged in a regular manner to form a grid structure 11. This grid structure 11 of spacer elements 5 is located between the enclosure 4 and the horizontal plate 3 supporting the horizontal plate 3. The grid structure 11 provides a plurality of compartments 12, which have rectangular or quadratic cross-sections. These compartments 12 can be fluidly connected with each other, at least in part, forming greater compartments 16. Each compartment 16 may be filed with a foam 14, e.g. a polyurethane foam, for energy and shock absorption. Further, a membrane 15 can be provided in each compartment 12 providing a volume to be filled with the foam 14 as well as to increase energy absorption, in particular in connection with the foam 14.

The grid structure 11 can be of any regular or non-regular form, for instance having quadratic, rectangular, or any n-corner shaped structure, for instance hexagonal or octagonal shape.

Each compartment 12 may comprise one or more connection channels 13 to one or more adjacent compartments 12. Each greater compartment 16 may also comprise one or more connection channels to other compartments 12 and/or greater compartments 16. The connections between the compartments 12 and/or greater compartments 16 can be provided such that hot stream channels are provided guiding them from the different compartments 12 and/or different greater compartments 16 to an at least in part common output channel of different compartments 12 and/or of different greater compartments 16 and further to one or more outlets of the battery pack 1. Such an arrangement, where the arrows show the flow direction of possible hot stream via connection channels 13 between the compartments 12, is shown in Figure 4, where the openings between different compartments 12 leading to two parallel output channels 17a, 17b, each leading via further different compartments 12 to two different outlets 18a, 18b.

The connection channels 13 can be provided for instance in form of a spiral via different connected compartments 12 or the like.

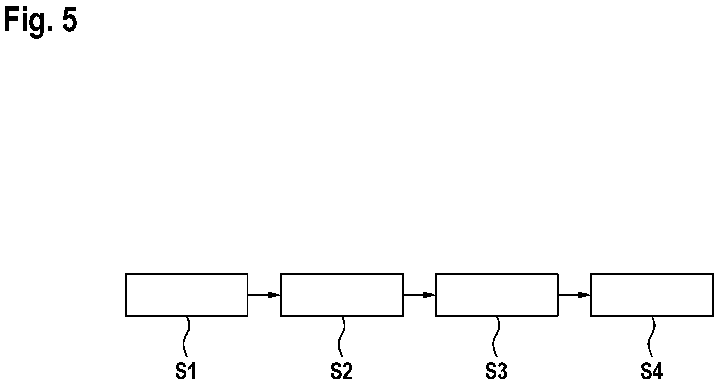

Figure 5 shows steps of a method according to an embodiment of the present invention.

In Figure 5 steps of a method for providing a battery pack is shown. The method comprises the steps of
- Providing S1 a plurality of battery cells 2,
- Providing S2 an enclosure 4,
- Arranging S3 the plurality of battery cells 2 on top of a horizontal component 3,
- Spacing apart S4 the horizontal component 3 from the enclosure 4 by at least one spacer element 5, wherein said at least one spacer element 5 provides at least one hot stream channel,
preferably wherein said horizontal component 3 is manufactured using injection moulding.

In an embodiment, e.g. shown in Figure 1, the horizontal component 3 can be an injection molded reinforced plastic component, which can be installed underneath Li-Ion cells 2, e.g. cylindrical or prismatic, with an emergency venting opening 8 on the bottom of each cell 2.

In a further embodiment, the horizontal component 3 can be made of one or more modules 3a, 3b, 3c, detachably joint together in order to cover the full surface of the battery pack 1. Each module 3a, 3b, 3c of the horizontal component 3 can be made of a horizontal plate with a system of vertical walls acting as spacer elements 5. Spacer elements 5 and the horizontal component 3 can be made of the same material, e.g. reinforced plastic, and formed in one piece. The horizontal component 3 is oriented in such a way that the cells 2 are directly sit on the horizontal plate 3, while the vertical walls, i.e. the spacer elements 5, are directly in contact with the enclosure 4 of the battery pack 1, creating hot stream channels 6. The horizontal plate 3 is provided with weak points/cut-outs 7 in correspondence of the venting opening 8 of each cell in form of circles, crosses or any suitable form. On top of the horizontal component 3, a layer 10 of fragile heat resistant material, e.g. provided by overmolding or clipping, is provided. When a cell 2 goes in thermal runaway, the released hot stream breaks locally the fragile material of the layer 10 and the plastic plate in correspondence of the weak point/cut-out 7 and flows to the pack outlet through the channels 6, which can be created between the vertical walls, i.e the spacer elements 5 and a bottom of the enclosure 4 in form of a metal tray. The fragile material of the layer 10 and weak point/cut-out 7 are provided, e.g. placed and/or installed in correspondence of the life cells 2, protecting the cells 2 from the heat of a hot stream.

In another embodiment, as shown for instance in Figure 2, a grid structure 11 is placed under the battery cells 2. The cells 2 are placed over a plate 3, which is also integrating an element 7, which opens when the cell 2 is venting in order to orient the gas flow. The grid structure 11 may be light-weight and it could enhance stiffness to the battery pack 1. The grid structure 11 can be produced by injection moulding in a single step.

A single element of the venting, i.e. a compartment 12, may have the following features:
- Holes or openings 13 in the sidewalls of the spacer elements 5 allow to manage the flow of the venting. Different positions of the holes allow to manage the direction as required forming output channels 17a, 17b.
- One or more of the holes or openings 13 can be designed to create also energy absorption as collapsible structure.
- The compartment 12 may have a membrane 15, which can be produced during the injection moulding of the grid structure 11. It may provides giving a volume to fill with a PUR foam and/or making energy adsorption by using tailored design. The PUR foam is light and it allows to absorb energy during impact, e.g. a crush, or an intrusion. The plastic PUR can be added with a secondary process or with a thermoplastic/thermosetting combined machine. The type of the PUR foam could be designed to improve the energy absorption and is adapted to the dimension of the compartment or greater compartment, etc.. Other materials can be used, e.g. thermosetting, like EPDM foam, etc., and/or thermoplastic, e.g. TPE bulk in 2K process, foamed PE/PP or PVC or the like, wherein TPE means thermoplastic elastomer, PE means polyethylene, PP means polypropylene, EPDM means ethylene propylene diene monomer rubber and PVC means polyvinyl chloride. The grid structure 11 could have optimized wall thickness, orientation and relative dimensions of the spacer elements 5 and/or their position to other spacer elements 5.

In an embodiment the invention relates to and/or provides a battery pack comprising a plurality of battery cells, and an enclosure, wherein the plurality of battery cells are arranged on top of a horizontal component, preferably in form of a plate and that the horizontal component is spaced apart from the enclosure by at least one spacer element, said at least one spacer element providing at least one hot stream channel for evacuating hot gases during thermal runaway. In addition said spacer element can act as mechanical energy dissipator/absorber in case of crush with external impactor.

At least one embodiment may provide at least one of the following features and/or at least one of the following advantages:
- Providing structure to the battery pack.
- Enhancing impact stiffness to the battery pack.
- Light-weight.
- Protecting the cells from impact intrusion, e.g. by using openings collapsible and/or foam and/or membranes.
- Providing, e.g. in case of thermal runaway, a safe guidance of the hot venting stream to an outlet, venting management.
- Easy and cost-effective manufacture of the battery pack.
- Providing at least one hot stream channel for evacuating hot gases during thermal runaway by at least one spacer element.
- Said at least one spacer element can act as mechanical energy dissipator/absorber in case of crush with external impactor.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims.

### List of reference signs

- 1: Battery pack
- 2: Battery cell
- 3: Horizontal component
- 3a, 3b, 3c: Module of horizontal component
- 4: Enclosure
- 5: Spacer element
- 6: Channel
- 7: Breaking point/weak point
- 8: Emergency opening
- 9: Connection
- 10: Layer component
- 11: Grid of spacer elements
- 12: Compartment
- 13: Opening
- 14: PUR foam
- 15: Membrane
- 16: Connected/greater compartments
- 17a, 17b: Output channel
- 18a, 18b: Outlet

- S1-S4: Method steps

## Claims

1. Battery pack (1) comprising
a plurality of battery cells (2), and
an enclosure (4), wherein
the plurality of battery cells (2) are arranged on top of a horizontal component (3), preferably in form of a plate and that
the horizontal component (3) is spaced apart from the enclosure(4) by at least one spacer element (5), said at least one spacer element (5) providing at least one hot stream channel (6), **characterized in that**
the horizontal component (3) comprises at least one predetermined breaking point (7) formed such to provide a hot stream flow to enter said at least one hot stream channel (6) upon breaking said at least one breaking point (7), preferably each with one hot stream channel (6), wherein
each predetermined breaking point (7) is provided such that upon breaking of an emergency opening (8) of a battery cell (2), hot stream flows to said breaking point (7), wherein
said at least one breaking point (7) is provided in form of a local thickness and/or density reduction and/or a fragile element (15), preferably a membrane, within the horizontal component (3).

2. Battery pack (1) according to claim 1, **characterized in that** the horizontal component (3) is made of plastic, preferably reinforced plastic.

3. Battery pack (1) according to one of the claims 1-2, **characterized in that** the horizontal component (3) comprises at least two parts (3a, 3b, 3c) detachably joined together, preferably via one or more screw connections (9) and/or one or more clip connections.

4. Battery pack (1) according to one of the claims 1-3, **characterized in that** between the horizontal component (3) and at least one of the battery cells (2), a layer component (10) is arranged comprising heat resistant material, preferably fragile heat resistant material.

5. Battery pack (1) according to one of the claims 1-4, **characterized in that** at least two spacer elements (5) are provided, wherein the spacer elements (5) are spaced apart from each other providing a hot stream channel (6) between said two spacer elements (5), preferably wherein a plurality of spacer elements (5) is formed such to provide a grid structure (11), preferably forming a plurality of separate compartments (12).

6. Battery pack (1) according to claim 5, **characterized in that** the spacer elements (5) are arranged essentially perpendicular to the horizontal component (3).

7. Battery pack (1) according to one of the claims 1-6, **characterized in that** the enclosure (4) comprises at least in part a metal and/or plastic, preferably a thermoplastic and/or wherein a bottom of the enclosure (4) is connected to the horizontal component (3) via said at least one spacer element (5).

8. Battery pack (1) according to one of the claims 1-7, **characterized in that** said at least one hot stream channel (6) comprises one or more sections having at least in part a spiral, serpentine, or labyrinth form, preferably wherein said at least one hot stream channel (6) is provided in form of a spiral, serpentine, or labyrinth.

9. Battery pack (1) according to one of the claims 1-8, **characterized in that** a bottom of the enclosure (4) is trough-shaped providing a receptacle for a hot stream.

10. Battery pack (1) according to claim 5, **characterized in that** at least two of said plurality of compartments (12) are connected via an inter compartment channel (13), preferably wherein two adjacent compartments (12) are connected via an opening (13) in the common wall of said two compartments (12).

11. Battery pack (1) according to at least claim 5, **characterized in that** a shock absorbing element (14), preferably foam, preferably **PUR** foam, is provided in at least one of the compartments (12), preferably in each compartment (12).

12. Battery pack (1) according to claim 11, **characterized in that** the shock absorbing element (14) is covered with a membrane element (15), preferably wherein the shock absorbing element (14) is located below an inter compartment channel (13).

13. Method for providing a battery pack (1), comprising the steps of
- Providing (S1) a plurality of battery cells (2),
- Providing (S2) an enclosure (4),
- Arranging (S3) the plurality of battery cells (2) on top of a horizontal component (3),
- Spacing (S4) apart the horizontal component (3) from the enclosure (4) by at least one spacer element (5), wherein said at least one spacer element (5) provides at least one hot stream channel (6),
preferably wherein said horizontal component (3) is manufactured using injection moulding, wherein
the horizontal component (3) comprises at least one predetermined breaking point (7) formed such to provide a hot stream flow to enter said at least one hot stream channel (6) upon breaking said at least one breaking point (7), preferably each with one hot stream channel (6), wherein
each predetermined breaking point (7) is provided such that upon breaking of an emergency opening (8) of a battery cell (2), hot stream flows to said breaking point (7), wherein
said at least one breaking point (7) is provided in form of a local thickness and/or density reduction and/or a fragile element (15), preferably a membrane, within the horizontal component (3).

## Patentansprüche

1. Batteriepack (1) umfassend
eine Mehrzahl von Batteriezellen (2), und
ein Gehäuse (4), wobei
die Mehrzahl der Batteriezellen (2) auf einem horizontalen Bauteil (3), vorzugsweise in Form einer Platte, angeordnet sind und dass
das horizontale Bauteil (3) durch mindestens ein Abstandselement (5) von dem Gehäuse (4) beabstandet ist, wobei das mindestens eine Abstandselement (5) mindestens einen Heißstromkanal (6) bereitstellt, **dadurch gekennzeichnet, dass**
das horizontale Bauteil (3) mindestens eine Sollbruchstelle (7) umfasst, die so ausgebildet ist, dass beim Brechen der mindestens einen Sollbruchstelle (7) ein Heißstromfluss in den mindestens einen Heißstromkanal (6) eintritt, vorzugsweise jede mit einem Heißstromkanal (6), wobei
jede Sollbruchstelle (7) so ausgebildet ist, dass beim Öffnen einer Notöffnung (8) einer Batteriezelle (2) ein heißer Strom zu der Sollbruchstelle (7) fließt, wobei
die mindestens eine Sollbruchstelle (7) in Form einer lokalen Dicken- und/oder Dichteverringerung und/oder eines zerbrechlichen Elements (15), vorzugsweise einer Membran, innerhalb des horizontalen Bauteils (3) bereitgestellt ist.

2. Batteriepack (1) nach Anspruch 1, **dadurch gekennzeichnet, dass** das horizontale Bauteil (3) aus Kunststoff, vorzugsweise aus verstärktem Kunststoff, hergestellt ist.

3. Batteriepack (1) nach einem der Ansprüche 1 bis 2, **dadurch gekennzeichnet, dass** das horizontale Bauteil (3) mindestens zwei Teile (3a, 3b, 3c) umfasst, die lösbar miteinander verbunden sind, vorzugsweise über eine oder mehrere Schraubverbindungen (9) und/oder eine oder mehrere Clipverbindungen.

4. Batteriepack (1) nach einem der Ansprüche 1 bis 3, **dadurch gekennzeichnet, dass** zwischen dem horizontalen Bauteil (3) und mindestens einer der Batteriezellen (2) eine Schichtkomponente (10) aus hitzebeständigem, vorzugsweise zerbrechlichem hitzebeständigem Material angeordnet ist.

5. Batteriepack (1) nach einem der Ansprüche 1-4, **dadurch gekennzeichnet, dass** mindestens zwei Abstandshalterelemente (5) bereitgestellt sind, wobei die Abstandshalterelemente (5) voneinander beabstandet sind und einen Heißstromkanal (6) zwischen den beiden Abstandshalterelementen (5) bilden, wobei vorzugsweise eine Vielzahl von Abstandshalterelementen (5) so ausgebildet ist, dass diese eine Gitterstruktur (11) bilden, die vorzugsweise eine Vielzahl von separaten Kammern (12) bildet.

6. Batteriepack (1) nach Anspruch 5, **dadurch gekennzeichnet, dass** die Abstandselemente (5) im Wesentlichen senkrecht zum horizontalen Bauteil (3) angeordnet sind.

7. Batteriepack (1) nach einem der Ansprüche 1 bis 6, **dadurch gekennzeichnet, dass** das Gehäuse (4) zumindest teilweise ein Metall und/oder einen Kunststoff, vorzugsweise einen thermoplastischen Kunststoff, umfasst und/oder wobei ein Boden des Gehäuses (4) über das mindestens eine Abstandselement (5) mit dem horizontalen Bauteil (3) verbunden ist.

8. Batteriepack (1) nach einem der Ansprüche 1-7, **dadurch gekennzeichnet, dass** der mindestens eine Heißstromkanal (6) einen oder mehrere Abschnitte umfasst, die zumindest teilweise eine Spiral-, Serpentinen- oder Labyrinthform aufweisen, vorzugsweise wobei der mindestens eine Heißstromkanal (6) in Form einer Spirale, einer Serpentine oder eines Labyrinths bereitgestellt ist.

9. Batteriepack (1) nach einem der Ansprüche 1-8, **dadurch gekennzeichnet, dass** ein Boden des Gehäuses (4) wannenförmig ausgebildet ist und eine Aufnahme für einen Heißstrom bereitstellt.

10. Batteriepack (1) nach Anspruch 5, **dadurch gekennzeichnet, dass** mindestens zwei der mehreren Kammern (12) über einen Zwischen-Kammer-Kanal (13) verbunden sind, vorzugsweise wobei zwei benachbarte Kammern (12) über eine Öffnung (13) in der gemeinsamen Wand der beiden Kammern (12) verbunden sind.

11. Batteriepack (1) nach mindestens Anspruch 5, **dadurch gekennzeichnet, dass** in mindestens einer der Kammern (12), vorzugsweise in jeder Kammer (12), ein stoßdämpfendes Element (14), vorzugsweise Schaum, vorzugsweise PUR-Schaum, bereitgestellt ist.

12. Batteriepack (1) nach Anspruch 11, **dadurch gekennzeichnet, dass** das stoßdämpfende Element (14) mit einem Membranelement (15) bedeckt ist, vorzugsweise wobei das stoßdämpfende Element (14) unter einem Zwischen-Kammer-Kanal (13) angeordnet ist.

13. Verfahren zur Bereitstellung eines Batteriepacks (1), umfassend die Schritte
- Bereitstellen (S1) einer Mehrzahl von Batteriezellen (2),
- Bereitstellen (S2) eines Gehäuses (4),
- Anordnen (S3) der Medhrzahl von Batteriezellen (2) auf einem horizontalen Bauteil (3),
- Beabstanden (S4) des horizontalen Bauteils (3) von dem Gehäuse (4) durch mindestens ein Abstandselement (5), wobei das mindestens eine Abstandselement (5) mindestens einen Heißstromkanal (6) bereitstellt,
vorzugsweise wobei das horizontale Bauteil (3) im Spritzgussverfahren hergestellt wird, wobei
das horizontale Bauteil (3) mindestens eine Sollbruchstelle (7) umfasst, die so ausgebildet ist, dass beim Brechen der mindestens einen Sollbruchstelle (7) ein Heißstromfluss in den mindestens einen Heißstromkanal (6) eintritt, vorzugsweise jede mit einem Heißstromkanal (6), wobei
jede Sollbruchstelle (7) so ausgebildet ist, dass beim Öffnen einer Notöffnung (8) einer Batteriezelle (2) ein heißer Strom zu der Sollbruchstelle (7) fließt, wobei
die mindestens eine Sollbruchstelle (7) in Form einer lokalen Dicken- und/oder Dichteverringerung und/oder eines zerbrechlichen Elements (15), vorzugsweise einer Membran, innerhalb des horizontalen Bauteils (3) bereitgestellt ist.

## Revendications

1. Bloc-batterie (1) comprenant :
une pluralité d'éléments de batterie (2), et
une enceinte (4), dans lequel
la pluralité d'éléments de batterie (2) sont agencés au-dessus d'un composant horizontal (3), de préférence sous forme d'une plaque et où
le composant horizontal (3) est espacé de l'enceinte (4) par au moins un élément d'espacement (5), ledit au moins un élément d'espacement (5) fournissant au moins un canal de flux chaud (6), **caractérisé en ce que**
le composant horizontal (3) comprend au moins un point de rupture (7) prédéterminé formé de sorte à faire pénétrer un écoulement de flux chaud dans ledit au moins un canal de flux chaud (6) lors de la rupture dudit au moins un point de rupture (7), de préférence chacun avec un canal de flux chaud (6), dans lequel
chaque point de rupture (7) prédéterminé est prévu de telle sorte que lors de la rupture d'une ouverture d'urgence (8) d'un élément de batterie (2), le flux chaud s'écoule vers ledit point de rupture (7), dans lequel
ledit au moins un point de rupture (7) est prévu sous forme d'une épaisseur locale et/ou d'une réduction de densité et/ou d'un élément fragile (15), de préférence une membrane, à l'intérieur du composant horizontal (3).

2. Bloc-batterie (1) selon la revendication 1, **caractérisé en ce que** le composant horizontal (3) est composé de plastique, de préférence de plastique renforcé.

3. Bloc-batterie (1) selon l'une des revendications 1 à 2, **caractérisé en ce que** le composant horizontal (3) comprend au moins deux parties (3a, 3b, 3c) assemblées de manière détachable, de préférence par le biais d'une ou plusieurs connexions à vis (9) et/ou une ou plusieurs connexions à pince.

4. Bloc-batterie (1) selon l'une des revendications 1 à 3, **caractérisé en ce qu'**entre le composant horizontal (3) et au moins l'un des éléments de batterie (2), un composant de couche (10) est agencé comprenant un matériau résistant à la chaleur, de préférence un matériau fragile résistant à la chaleur.

5. Bloc-batterie (1) selon l'une des revendications 1 à 4, **caractérisé en ce qu'**au moins deux éléments d'espacement (5) sont prévus, dans lequel les éléments d'espacement (5) sont espacés les uns des autres en fournissant un canal de flux chaud (6) entre lesdits deux éléments d'espacement (5), de préférence dans lequel une pluralité d'éléments d'espacement (5) est formée de sorte à fournir une structure de grille (11), de préférence formant une pluralité de compartiments séparés (12).

6. Bloc-batterie (1) selon la revendication 5, **caractérisé en ce que** les éléments d'espacement (5) sont agencés essentiellement perpendiculairement au composant horizontal (3).

7. Bloc-batterie (1) selon l'une des revendications 1 à 6, **caractérisé en ce que** l'enceinte (4) comprend au moins en partie un métal et/ou un plastique, de préférence un thermoplastique et/ou dans lequel un fond de l'enceinte (4) est connecté au composant horizontal (3) par le biais dudit au moins un élément d'espacement (5).

8. Bloc-batterie (1) selon l'une des revendications 1 à 7, **caractérisé en ce que** ledit au moins un canal de flux chaud (6) comprend une ou plusieurs sections ayant au moins en partie une forme de spirale, de serpentin ou de labyrinthe, de préférence dans lequel ledit au moins un canal de flux chaud (6) est prévu sous forme d'une spirale, d'un serpentin ou d'un labyrinthe.

9. Bloc-batterie (1) selon l'une des revendications 1 à 8, **caractérisé en ce qu'**un fond de l'enceinte (4) est en forme de cuvette fournissant un réceptacle pour un flux chaud.

10. Bloc-batterie (1) selon la revendication 5, **caractérisé en ce qu'**au moins deux de ladite pluralité de compartiments (12) sont connectés par le biais d'un canal inter-compartiment (13), de préférence dans lequel deux compartiments (12) adjacents sont connectés par le biais d'une ouverture (13) dans la paroi commune desdits deux compartiments (12).

11. Bloc-batterie (1) selon au moins la revendication 5, **caractérisé en ce qu'**un élément amortisseur (14), de préférence de la mousse, de préférence de la mousse PUR, est prévu dans au moins l'un des compartiments (12), de préférence dans chaque compartiment (12).

12. Bloc-batterie (1) selon la revendication 11, **caractérisé en ce que** l'élément amortisseur (14) est recouvert avec un élément membranaire (15), de préférence dans lequel l'élément amortisseur (14) est situé sous un canal inter-compartiment (13).

13. Procédé de fourniture d'un bloc-batterie (1), comprenant les étapes de
- fourniture (S1) d'une pluralité d'éléments de batterie (2),
- fourniture (S2) d'une enceinte (4),
- agencement (S3) de la pluralité d'éléments de batterie (2) au-dessus d'un composant horizontal (3),
- espacement (S4) du composant horizontal (3) de l'enceinte (4) par au moins un élément d'espacement (5), dans lequel ledit au moins un élément d'espacement (5) fournit au moins un canal de flux chaud (6),
de préférence dans lequel ledit composant horizontal (3) est fabriqué à l'aide d'un moulage par injection, dans lequel
le composant horizontal (3) comprend au moins un point de rupture (7) prédéterminé formé de sorte à faire pénétrer un écoulement de flux chaud dans ledit au moins un canal de flux chaud (6) lors de la rupture dudit au moins un point de rupture (7), de préférence chacun avec un canal de flux chaud (6), dans lequel
chaque point de rupture (7) prédéterminé est prévu de telle sorte que lors de la rupture d'une ouverture d'urgence (8) d'un élément de batterie (2), le flux chaud s'écoule vers ledit point de rupture (7), dans lequel
ledit au moins un point de rupture (7) est prévu sous forme d'une épaisseur locale et/ou d'une réduction de densité et/ou d'un élément fragile (15), de préférence une membrane, à l'intérieur du composant horizontal (3).
